# EUROPEAN PATENT SPECIFICATION

(11) **EP 3 192 673 B1**
(45) Date of publication and mention of the grant of the patent: **03.04.2019**
(21) Application number: 15840083.8
(22) Date of filing: 05.08.2015
(51) Int. Cl.: B60C 11/01, B60C 5/00, B60C 11/03, B60C 11/12, B60C 11/13

(54) **PNEUMATIC TIRE**
LUFTREIFEN
PNEUMATIQUE

(30) Priority: 11.09.2014 JP 2014185306
(43) Date of publication of application: 19.07.2017
(73) Proprietor: Bridgestone Corporation, Tokyo 104-8340 (JP)
(72) Inventor: SHIMURA, Takashi, Tokyo 104-8340 (JP)
(74) Representative: Oxley, Robin John George
(86) International application number: PCT/JP2015/003937
(87) International publication number: WO 2016/038787

(56) References cited:
- EP-A1- 2 338 702
- EP-A1- 2 353 884
- EP-A1- 3 130 483
- EP-A1- 3 150 407
- EP-A2- 1 529 659
- JP-A- H11 321 240
- JP-A- 2009 149 124
- JP-A- 2010 111 358
- JP-A- 2014 108 653

## Description

### TECHNICAL FIELD

This disclosure relates to a pneumatic tire.

### BACKGROUND

As a pneumatic tire that is required to be highly fuel efficient for electric vehicles, for example, a narrow-width, large diameter pneumatic tire has been proposed by this applicant (see Patent Literature (PTL) 1). Attention is drawn to the disclosures of EP1529659 and EP2338702, and to the disclosures of EP3130483 and EP3 150407 which form part of the state of the art under Article 54(3) EPC.

### CITATION LIST

### Patent Literature

PTL 1: WO2011122170A1

### SUMMARY

### (Technical Problem)

In particular, in the aforementioned narrow-width, large diameter pneumatic tire, when considering that such tire is applied as an all-season tire, there has been a desire to improve on-snow performance, drainage performance and ride comfort at a high level. Specifically, as an all-season tire, it is necessary to improve on-snow performance and drainage performance to correspond to a variety of road surface conditions. However, if a lot of grooves are provided on the land portion to improve the performances, non-uniformity of the land portion rigidity may affect the ride comfort.

Therefore, it would be helpful to provide a pneumatic tire capable of improving on-snow performance, drainage performance and ride comfort.

### (Solution to Problem)

A summary of this disclosure is as follows.

A pneumatic tire of this disclosure includes, on a tread surface, a plurality of circumferential main grooves continuously extending in a tread circumferential direction, and having a specified vehicle mounting direction, wherein,
on the tread surface, when a land portion defined by, among the plurality of circumferential main grooves, an inner circumferential main groove located on an innermost side in the vehicle mounting direction and a tread edge is defined as an inner shoulder land portion, and a land portion defined by, among the plurality of circumferential main grooves, an outer circumferential main groove located on an outermost side in the vehicle mounting direction and another tread edge is defined as an outer shoulder land portion,
the inner shoulder land portion substantially does not include a groove, and includes only one or more inner circumferential sipe extending in the tread circumferential direction and a plurality of inner widthwise sipes extending in a tread width direction,
the outer shoulder land portion has a plurality of widthwise grooves communicating with the outer circumferential main groove and the another tread edge and extending in the tread width direction, and an outer widthwise sipe located between the widthwise grooves adjacent in the tread circumferential direction and extending in the tread width direction,
the width of the inner shoulder land portion measured along the tread width direction is 18 to 28% with respect to the tread width, and
the width of the outer shoulder land portion measured along the tread width direction is 25 to 35% with respect to the tread width.

According to the aforementioned pneumatic tire of this disclosure, on-snow performance, drainage performance and ride comfort can be improved.

Here, in this disclosure, the "groove" such as each circumferential main groove and widthwise groove refers to those having an opening with a width of 2 mm or more on the tread surface when a pneumatic tire is mounted on an applicable rim, inflated with a prescribed internal pressure and applied with no load. Further, "the inner shoulder land portion does not substantially include a groove" means that the length measured along the extending direction of the groove does not include a groove that exceeds 30% of the maximum width of the inner shoulder land portion measured along the tread width direction of the land portion.

Further, the "sipe" refers to a thin slip that is formed inside a land portion by cutting the surface thereof and can be closed at the time of grounding, and refers to those having an opening with a width of less than 2 mm on the tread surface when a pneumatic tire is mounted on an applicable rim, inflated with a prescribed internal pressure and applied with no load.

Further, the "tread edge" refers to the outermost position in the tread width direction on the ground contact surface when a tire is mounted on an applicable rim, inflated with a prescribed internal pressure and applied with a load (the maximum load) that corresponds to the maximum load capacity.

Here, the "applicable rim" is an industrial standard valid in regions where the tire is produced and used, and refers to a standard rim of applicable size described in "JATMA (Japan Automobile Tyre Manufactures Association) Year Book" of Japan, the "ETRTO (European Tyre and Rim Technical Organization) Year Book" of Europe, and the "TRA (Tire and Rim Association, Inc.) Year Book" of the United State of America (also referred to as "measuring rim" according to the ETRTO Standards Manual and "design rim" according to TRA Year Book). For a rim in a size not described in the aforementioned industrial standards, it refers to a rim with a width that corresponds to a bead width of a tire. Further, the "prescribed internal pressure" refers to a pneumatic pressure (the maximum pneumatic pressure) that corresponds to the maximum load capacity for a single wheel of an applicable size/ ply rating described in JATMA or the like, and "the maximum load capacity" refers to the maximum mass permitted to be loaded onto a tire in the aforementioned standards.

In the disclosed pneumatic tire, the outer shoulder land portion may preferably have no outer circumferential sipe extending in the tread circumferential direction, or, when the outer shoulder land portion has the outer circumferential sipe, the number of rows of the inner circumferential sipe may preferably be greater than that of the outer circumferential sipe.

This configuration allows for further improving ride comfort.

It is noted that "the number of rows of circumferential sipe" refers to a value obtained by counting, when a plurality of sipes are disposed spaced apart from one another in the tread circumferential direction, the plurality of sipes defined as one row, and when one continuous circumferential sipe is disposed in the tread circumferential direction, the one circumferential sipe defined as one row, in the tread width direction.

In the disclosed pneumatic tire, the width of the outer shoulder land portion measured along the tread width direction may preferably be greater than that of the inner shoulder land portion measured along the tread width direction.

This configuration allows for improving steering stability.

### (Advantageous Effect)

According to this disclosure, a pneumatic tire capable of improving on-snow performance, drainage performance and ride comfort can be provided.

### BRIEF DESCRIPTION OF THE DRAWINGS

In the accompanying drawings:
FIG. 1 is a developed view illustrating a tread pattern of a pneumatic tire according to Embodiment 1 of this disclosure;
FIGS. 2A and 2B are partial developed views illustrating main parts of the tread pattern illustrated in FIG. 1;
FIG. 3 is a developed view illustrating a tread pattern of a pneumatic tire according to Embodiment 2 of this disclosure;
FIG. 4 is a partial perspective view of the pneumatic tire according to Embodiment 2 of this disclosure;
FIG. 5 is a cross-sectional view of an inner circumferential sipe and an outer circumferential sipe in the tread circumferential direction;

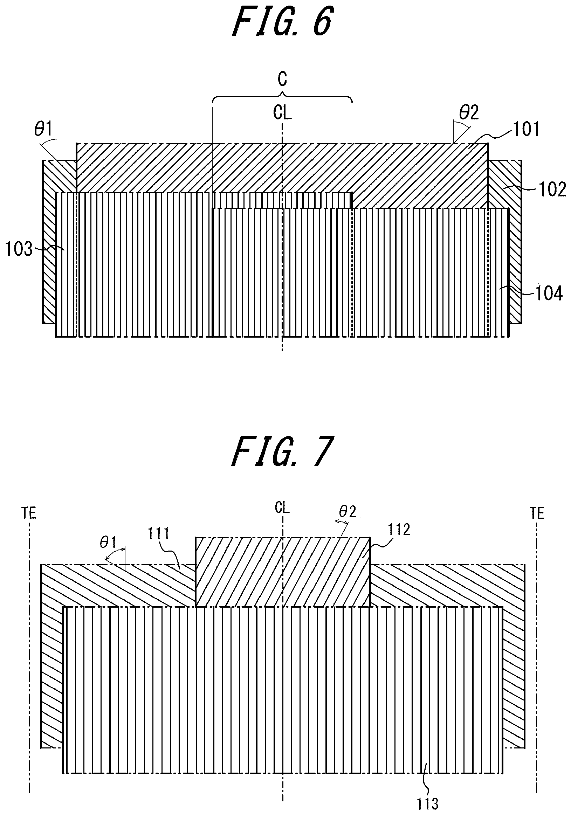

FIG. 6 is a schematic plan view illustrating Example 1 of a belt structure;
FIG. 7 is a schematic plan view illustrating Example 2 of the belt structure;

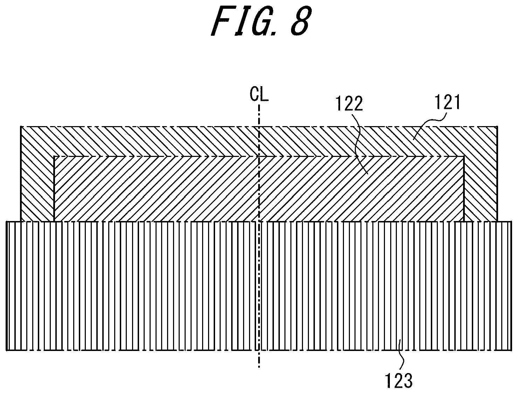

FIG. 8 is a schematic plan view illustrating Example 3 of the belt structure; and

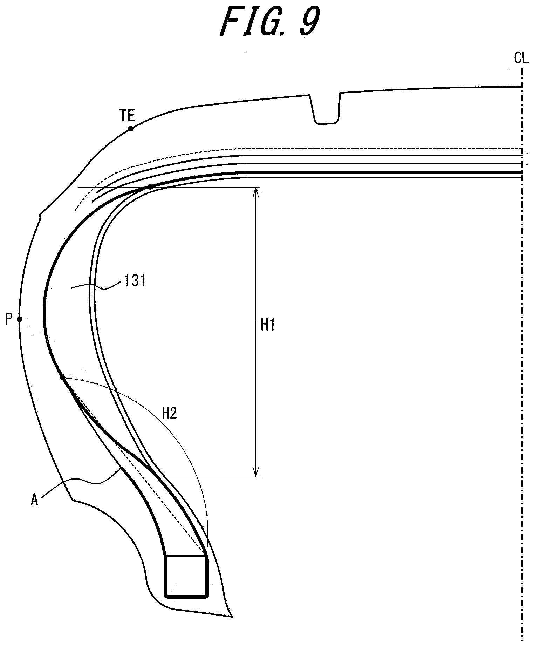

FIG. 9 is a tire width direction schematic cross-sectional view illustrating a half portion in the tire width direction of a pneumatic tire according to Embodiment 3 of this disclosure.

### DETAILED DESCRIPTION

Embodiments of this disclosure are illustrated in detail below with reference to the accompanying drawings.

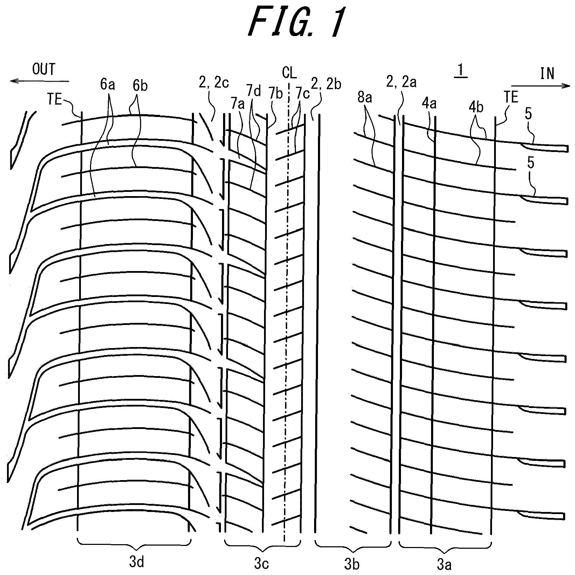

FIG. 1 is a developed view illustrating a thread pattern of a pneumatic tire (hereinafter referred to also as a tire) according to Embodiment 1 of this disclosure, in which a tread surface 1 and a buttress portion of the tire when the tire is mounted on an applicable rim, inflated with a prescribed internal pressure and applied with no load are illustrated in a developed manner. It is noted that the internal structure, etc. of the tire may be the same as those of the conventional tires.

Further, in the tire according to this embodiment, a vehicle mounting direction of the tire is specified. In FIG. 1, the right side is inside in the vehicle mounting direction (designated as "IN"), and the left side is outside in the vehicle mounting direction (designated as "OUT"). Further, supposing that the tire outer diameter is defined as OD (mm) and the tire section width is defined as SW (mm), if the tire section width SW is less than 165 (mm) when the internal pressure is 250 kPa or more, the ratio of the tire section width SW and the outer diameter OD, SW/OD, is 0.26 or less, and if the tire section width SW is 165 (mm) or more, the tire section width SW (mm) and the outer diameter OD (mm) satisfy the relational expression of OD ≥ 2.135 x SW + 282.3 (hereinafter referred to also as the relational expression (1) is satisfied).

As illustrated in FIG. 1, the tire according to this embodiment has, on the tread surface 1, a plurality of circumferential main grooves 2 (three in the illustrated example) continuously extending in the tread circumferential direction. In the illustrated example, the tire has three circumferential main grooves 2a, 2b and 2c on the tread surface 1, and the circumferential main groove 2a located on the innermost side in the vehicle mounting direction and the circumferential main groove 2b are disposed in the tread half portion located inside in the vehicle mounting direction relative to the tire equatorial plane CL. Further, the circumferential main groove 2c located on the outermost side in the vehicle mounting direction is disposed in the tread half portion located outside in the vehicle mounting direction relative to the tire equatorial plane CL. In the illustrated example, four land portions 3a, 3b, 3c and 3d are defined by these circumferential main grooves 2a, 2b and 2c and the tread edge TE. It is noted that, hereinafter the circumferential main groove 2a is referred to as an inner circumferential main groove, the circumferential main groove 2c is referred to as an outer circumferential main groove, the land portion defined by the circumferential main groove 2a and the tread edge TE is referred to as an inner shoulder land portion 3a, and the land portion defined by the circumferential main groove 2c and the tread edge TE is referred to as an outer shoulder land portion 3d.

Here, in the tire according to this embodiment, the groove widths of respective circumferential main grooves 2 may be the same or different, and the groove width of the inner circumferential main groove 2a may be 2 to 5 mm, for example, the groove width of the circumferential main groove 2b may be 5 to 8 mm, for example, and the groove width of the outer circumferential main groove 2c may be 7 to 10 mm, for example.

Further, the groove depths of respective circumferential main grooves 2 may also be the same or different, and the groove depth of the circumferential main grooves 2a, 2b and 2c may be 6 to 8 mm, for example.

It is noted that the "groove width" and the "groove depth" refer to the opening width of the groove on the tread surface 1 and the average depth of the groove, respectively, when a tire is mounted on an applicable rim, inflated with a prescribed internal pressure and applied with no load. The same applies to the other grooves and sipes.

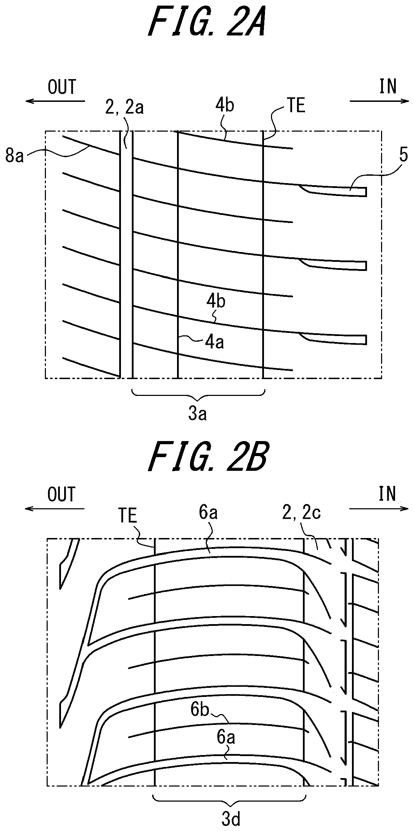

Here, the inner shoulder land portion 3a and the outer shoulder land portion 3d of the tread pattern in FIG. 1 are illustrated as a partial developed view in FIGS. 2(a) and 2(b), respectively.

As illustrated in FIGS. 2A and 2B(a), the inner shoulder land portion 3a does not substantially include a groove, and includes only the inner circumferential sipe 4a extending in the tread circumferential direction and a plurality of inner widthwise sipes 4b extending in the thread width direction.

It is noted that, in the tire according to this embodiment, the inner shoulder land portion 3a is not provided with a groove. Further, the inner circumferential sipe 4a is a piece (a row) of sipe continuously extending in the tread circumferential direction. A plurality of inner widthwise sipes 4b (16 pieces in the range illustrated in FIG. 1) are provided in the inner shoulder land portion 3a, and each inner widthwise sipe 4b intersects with the inner circumferential sipe 4a. In the illustrated example, each inner widthwise sipe 4b extends from the inner circumferential main groove 2a to outside in the tread width direction and directly opens to the tread edge TE. Further, as for the inner widthwise sipes 4b, one that connects to the lug groove 5 located in the region outside the tread edge TE in the tread width direction (buttress portion) and one that does not connect to the lug groove 5 are disposed alternately in the tread circumferential direction.

Further, as illustrated in FIGS. 2A and 2B(b), the outer shoulder land portion 3d has a plurality of widthwise grooves 6a each communicating with the outer circumferential main groove 2c and the tread edge TE and extending in the tread width direction and an outer widthwise sipe 6b located between the widthwise grooves 6a adjacent in the tread circumferential direction and extending in the tread width direction.

It is noted that, in the tire according to this embodiment, a plurality of widthwise grooves 6a are provided in the outer shoulder land portion 3d (eight in the range illustrated in FIG. 1). Further, each outer widthwise sipe 6b extends in the tread width direction and communicates with the tread edge TE and the outer circumferential main groove 2c. In the illustrated example, a piece of sipe is provided between two widthwise grooves 6a adjacent in the tread circumferential direction.

The effects brought by the aforementioned tire will be described.

It is necessary for the all-season tire to improve its on-snow performance and drainage performance so as to correspond to a variety of road surface conditions. When a lot of grooves are provided in the land portion to improve those performances, non-uniformity of the land portion rigidity, or the like, may affect ride comfort, and it has been difficult to improve on-snow performance, drainage performance and ride comfort at a high level.

Meanwhile, in the tire according to this embodiment, the inner shoulder land portion 3a has only sipes, which allows the land portion rigidity to be uniformed in the tread circumferential direction, and as a result, ride comfort can be improved while on-snow performance by sipes is maintained. Specifically, in general, the inner shoulder land portion 3a has a higher ground contact pressure than that of the outer shoulder land portion 3d due to the existence of a camber angle (a negative camber, in particular) of the tire, and non-uniformed rigidity in the tread circumferential direction on the land portion has affected ride comfort. Therefore, instead of grooves, sipes are provided in the inner shoulder land portion 3a so that the land portion rigidity can be uniformed in the tread circumferential direction, and as a result, ride comfort can be improved. Further, as the inner shoulder land portion 3a is provided with the inner circumferential sipe 4a and the inner widthwise sipes 4b, edge components can be ensured both in the traveling direction and the lateral force direction, and as a result, on-snow performance during straight running and during cornering can be maintained.

On the other hand, as for the outer shoulder land portion 3d, the ground contact pressure is reduced relative to the aforementioned existence of a camber angle, which reduces the influence on ride comfort. Thus, when the widthwise grooves 6a each communicating with the outer circumferential main groove 2c and the tread edge TE are provided, drainage performance can be improved. Further, when the widthwise grooves 6a and the outer widthwise sipes 6b are provided, on-snow performance can also be improved. It is noted that, in the light of drainage performance, it is preferable that the widthwise grooves 6a are provided instead of the outer widthwise sipes 6b and the outer shoulder land portion 3d is only provided with the widthwise grooves 6a. However, this configuration may excessively reduce rigidity of the outer shoulder land portion 3d, and steering stability and noise performance may not be ensured.

Furthermore, in general, under a high internal pressure condition, the ground contact pressure is increased, which allows the edge effect of sipes to be exhibited easily. Therefore, use of the tire according to this embodiment under a high internal pressure condition allows for improving on-snow performance more effectively. On the other hand, although longitudinal spring tends to be stronger in a tire under a high internal pressure, the inner shoulder land portion 3a is not substantially provided with grooves, and is provided with only the inner widthwise sipes 4b and the inner circumferential sipes 4a so as to suppress rigidity to be increased while uniformity of rigidity of the inner shoulder land portion 3a is ensured, and as a result, improvement of ride comfort is not hindered.

It is noted that the internal pressure of the tire according to this embodiment may preferably be 250 kPa or more, more preferably 280 kPa, and further preferably 300 kPa or more.

Here, in the tire according to this embodiment, the sipe width of the inner circumferential sipe 4a may be 0.5 to 1.5 mm, for example, and the sipe depth may be 6 to 8 mm, for example. Further, the sipe width of the inner widthwise sipe 4b may be 0.5 to 1.5 mm, for example, and the sipe depth may be 6 to 8 mm, for example.

Further, the distance between the inner widthwise sipes 4b in the tread circumferential direction may preferably be 10 to 15 mm. When it is 10 mm or more, the rigidity of the land portion 3a can be ensured, and as a result, steering stability and noise performance can be ensured. On the other hand, when the distance is 15 mm or less, the effect of improving on-snow performance during straight running can be obtained even more effectively. Furthermore, when the angle formed by the line connecting both ends of the inner widthwise sipe 4b (the end of the inner widthwise sipe 4b at the tread edge TE in the tread width direction and the end communicating with the inner circumferential main groove 2 in the tread width direction) relative to the tread width direction is defined as an inclination angle of the inner widthwise sipe 4b relative to the tread width direction, the inclination angle of the inner widthwise sipe 4b relative to the tread width direction may preferably be 30° or less so as to sufficiently improve on-snow performance during straight running.

Further, in the tire according to this embodiment, the groove width of the widthwise groove 6a may be 2 to 4 mm, for example, and the groove depth may be 6 to 8 mm. Further, the sipe width of the outer widthwise sipe 6b may be 0.5 to 1.5 mm, for example, and the sipe width may be 6 to 8 mm.

Further, the distance in the tread circumferential direction between two widthwise grooves 6a adjacent in the tread circumferential direction may be 17 to 30 mm. Furthermore, when the angle formed by the line connecting the tread width direction inner end of the widthwise groove 6a (communicating with the outer circumferential main groove 2c) and the portion located 10 mm outside in the tread width direction along the periphery extending from the inner end to the widthwise groove 6a relative to the tread width direction is defined as an inclination angle of the widthwise groove 6a relative to the tread width direction, the inclination angle is less than 10 °, in this example.

Further, when the angle formed by the line connecting the both ends (the end of the outer widthwise sipe 6b at the tread edge TE in the tread width direction and the end communicating with the outer circumferential main groove 2c in the tread width direction) of the outer widthwise sipe 6b relative to the tread width direction is defined as an inclination angle of the outer widthwise sipe 6b relative to the tread width direction, the inclination angle of the outer widthwise sipe 6b relative to the tread width direction may preferably be 40° or less. When the angle is 40° or less, the aforementioned on-snow performance during straight running can be obtained effectively.

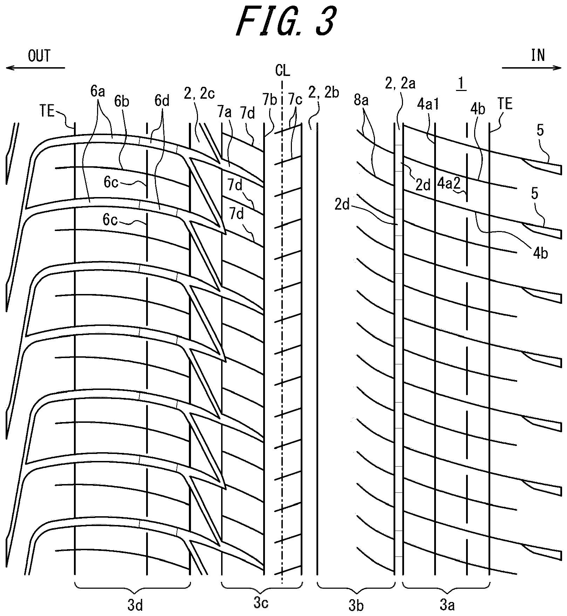

Further, in this embodiment, as illustrated in FIG. 1, the outer shoulder land portion 3d is not provided with the outer circumferential sipe extending in the tread circumferential direction. However, as with Embodiment 2 illustrated in FIG. 3 later, the outer circumferential sipe 6c may be provided. It is noted that, when the outer circumferential sipe 6c is provided, the number of rows of the inner circumferential sipe 4a may preferably be greater than that of the outer circumferential sipe 6c. According to this configuration, as aforementioned, although the inner shoulder land portion 3a is liable to affect ride comfort, when the number of rows of inner circumferential sipe 4a is increased, rigidity can be reduced while uniformity of tire rigidity in the tread circumferential direction is maintained, and as a result, ride comfort can be improved effectively. Further, as for the outer shoulder land portion 3d, steering stability during cornering where load is added to outside of the tire can be improved by relatively maintaining the rigidity in the tire width direction.

In this embodiment, the width of the outer shoulder land portion 3d measured along the tread width direction may preferably be greater than that of the inner shoulder land portion 3a measured along the tread width direction. According to this configuration, steering stability can be improved.

Further, the width of the inner shoulder land portion 3a measured along the tread width direction is 18 to 28% with respect to the tread width, and the width of the outer shoulder land portion 3d measured along the tread width direction is 25 to 35% with respect to the tread width. It is noted that the "tread width" refers to the length of the distance between tread edges TE on both sides measured along the tread width direction.

Subsequently, the land portion 3c defined by the circumferential main grooves 2b and 2c according to this embodiment will be described.

In this embodiment, as illustrated in FIG. 1, the land portion 3c may be defined as a rib-like land portion 3c that extends across between the circumferential main grooves 2b and 2c and has no grooves extending in the tread width direction. The rib-like land portion 3c has a central circumferential sipe 7b, which is one piece (row) in the illustrated example, continuously extending in the tread circumferential direction. The sipe width of the central circumferential sipe 7b may be 0.5 to 1.5 mm, for example, and the sipe depth thereof may be 3 to 6 mm, for example.

Further, in this embodiment, as illustrated in FIG. 1, the rib-like land portion 3c has a plurality of one end open lateral grooves 7a (four in the range illustrated in FIG. 1) each extending from the outer circumferential main groove 2c to inward in the vehicle mounting direction (right side in FIG. 1), up to the position that communicates with the central circumferential sipe 7b and terminating in the rib-like land portion 3c. Furthermore, the rib-like land portion 3c has a plurality of first one end open sipes 7c (16 in the range illustrated in FIG. 1) each extending from the circumferential main groove 2b to the outside in the vehicle mounting direction (left side in FIG. 1) and terminating in the rib-like land portion 3c without communicating with the central circumferential sipe 7b.

Here, the groove width (maximum width) of the one end open lateral groove 7a may be 3 to 5 mm, for example, and the groove depth may be 6 to 8 mm.

Further, the sipe width of the first one end open sipe 7c may be 0.5 to 1,5 mm, for example, and the sipe depth may be 2 to 4 mm.

It is noted that the "rib-like land portion" refers to a land portion that does not have grooves or sipes extending in the tread width direction across between two circumferential main grooves defining the rib-like land portion, and has a continuing portion in the tread circumferential direction.

Further, the "one end open lateral groove" and the "one end open sipe" refer to those with one end thereof opening to the circumferential main groove and the other end thereof not opening to the circumferential main groove or to the lateral groove. However, those with the other end thereof communicating with the circumferential sipe are included.

With respect to the aforementioned tire, the effects brought by the configuration of the land portion 3c are described.

First, in the tire according to this embodiment, the area around the outer circumferential main groove 2c may significantly be affected by input from the road surface during cornering due to reduction in the rigidity in that area. Specifically, the buckling phenomenon may occur in which the compressive stress outside in the vehicle mounting direction and the tensile stress inside in the vehicle mounting direction cause a tread rubber to be deformed, a belt to be deformed and a ground contact surface to be floated. Thus, in the tire according to this embodiment, the aforementioned one end open lateral groove 7a is provided, which allows for configuration in which the one end open lateral groove 7a is closed by the compressive stress on the outside in the vehicle mounting direction, and as a result, deformation of the tread rubber or the belt can be suppressed. Furthermore, as the one end open lateral groove 7a terminates in the rib-like land portion 3c, the rigidity against the tensile stress on inside in the vehicle mounting direction is increased, and as a result, deformation of the tread rubber or the belt can be suppressed. Therefore, according to this embodiment, first of all, buckling generation can be suppressed.

Further, in the tire according to this embodiment, as the central circumferential sipe 7b is provided, edge components to the lateral force direction can be ensured, and as a result, on-snow performance during cornering can further be improved.

Furthermore, the central circumferential sipe 7b is communicated with the one end open lateral groove 7a, and thus a corner portion of the block is formed on the rib-like land portion 3c, which increases the edge effect to the straight running direction and the lateral force direction, and as a result, on-snow performance during straight running and during cornering can be improved.

Furthermore, as the aforementioned first one end open sipes 7c is provided, edge components to the straight running direction is further increased, and as a result, on-snow performance during straight running can be improved. Here, as the first one end open sipe 7c does not communicate with the central circumferential sipe 7b, the rigidity of the rib-like land portion 3c is not reduced too much, and as a result, steering stability and noise performance can also be ensured.

Accordingly, the tire may have all of steering stability, noise performance and on-snow performance.

Further, as illustrated in FIG. 1, a plurality of one end open lateral grooves 7a are formed in the rib-like land portion 3c by being spaced apart from each other in the tread circumferential direction, and the rib-like land portion 3c has one or more (13 in the range illustrated in FIG. 1) second one end open sipes 7d, each located between the one end open lateral grooves 7a, extending from the outer circumferential main groove 2c to inward in the vehicle mounting direction, up to the position communicating with the central circumferential sipe 7b and terminating in the rib-like land portion 3c. In the illustrated example, respective distances between the two pieces of one end open lateral grooves 7a adjacent in the tread circumferential direction are provided with three second one end open sipes 7d.

Here, the sipe width of the second one end open sipe 7d may be 0.5 to 1.5 mm, for example, and the sipe depth may be 6 to 8 mm.

Thus, in the tire according to this embodiment, one or more second one end open sipes 7d extending from the outer circumferential main groove 2c to inward in the vehicle mounting direction, up to the position communicating with the central circumferential sipe 7b, and terminating in the rib-like land portion 3c may preferably be provided between the one end open lateral grooves 7a.

Accordingly, edge components to the straight running direction can further be ensured, and as a result, on-snow performance during straight running can further be improved. For example, if the one end open lateral grooves 7a are formed in place of all of the second one end open sipes 7d, the rigidity of the rib-like land portion 3c is reduced, which may cause steering stability and noise performance to deteriorate. Meanwhile, according to this embodiment, the one end open lateral grooves 7a and the second one end open sipes 7d are provide together, which allows for improving on-snow performance during straight running while ensuring steering stability and noise performance. It is noted that, as for suppression of the aforementioned buckling, its effect can be obtained sufficiently without increasing the number of one end open lateral grooves 7a so much.

To be more specific, the distance in the tread circumferential direction between the two one end open lateral grooves 7a adjacent in the tread circumferential direction may preferably be 35 to 70 mm. When the distance is 35 mm or more, the rigidity of the land portion 3c is ensured, and as a result, steering stability and noise performance can further be ensured. On the other hand, when the distance is 70 mm or less, the effect of aforementioned buckling suppression can effectively be obtained.

Further, the distance in the tread circumferential direction between the first one end open sipes 7c may preferably be 10 to 15 mm. When the distance is 10 mm or more, the rigidity of the land portion 3c is ensured, and as a result, steering stability and noise performance can further be ensured. On the other hand, when the distance is 15 mm or less, the effect of improvement of the aforementioned on-snow performance during straight running can further effectively be obtained.

Furthermore, the distance in the tread circumferential direction between the second one end open sipes 7d may preferably be 10 to 15 mm. When the distance is 10 mm or more, the rigidity of the land portion 3c is ensured, and as a result, steering stability and noise performance can further be ensured. On the other hand, when the distance is 15 mm or less, the effect of improvement of on-snow performance during straight running can further effectively be obtained.

Further, as illustrated in FIG. 1, the first one end open sipe 7c and the second one end open sipe 7d are preferably disposed by providing a phase difference in the tread circumferential direction, which allows for suppressing pattern noise generation and making the rigidity balance of the land portion 3c uniform.

As illustrated in FIG. 1, in this embodiment, the first one end open sipes 7c may preferably cross the tire equatorial plane CL (extend beyond the tire equatorial plane CL).

In general, in the pneumatic tire, the ground contact length is the longest on the tire equatorial plane CL. Thus, when the first one end open sipe 7c is disposed thereon, on-snow performance during straight running can effectively be improved. Further, in this case, as the one end open lateral grooves 7a are located outside when mounted on the vehicle, the buckling suppression effect can easily be obtained as mentioned above.

Here, when the angle formed by the line connecting both ends of the one end open lateral groove 7a relative to the tread width direction is defined as an inclination angle of the one end open lateral groove 7a relative to the tread width direction, the inclination angle of the one end open lateral groove 7a relative to the tread width direction may preferably be 30° or less. When the angle is 30° or less, the aforementioned buckling suppression effect can more effectively be obtained.

Further, when the angle formed by the line connecting both ends of the first one end open sipe 7c relative to the tread width direction is defined as an inclination angle of the first one end open sipe 7c relative to the tread width direction, the inclination angle of the first one end open sipe 7c may preferably be 35° or less. When the angle is 35° or less, the aforementioned on-snow performance during straight running can effectively be obtained.

Furthermore, when the angle formed by the line connecting both ends of the second one end open sipe 7d relative to the tread width direction is defined as an inclination angle of the second one end open sipe 7d relative to the tread width direction, the inclination angle of the second one end open sipe 7d may preferably be 40° or less. When the angle is 40° or less, the aforementioned on-snow performance during straight running can effectively be obtained.

Next, as illustrated in FIG. 1, the tire of this embodiment has, on its land portion 3b, a plurality of intermediate sipes 8a (seven in the range illustrated in FIG. 1) each extending from the inner circumferential main groove 2a to the outside in the vehicle mounting direction and terminating in the land portion 3b. As illustrated in FIG. 1, as the intermediate sipes 8a terminate in the land portion 3b, the land portion 3b is a rib-like land portion and has a portion that is continuous in the tread circumferential direction.

As for the rib-like land portion 3b, a portion that is continuous in the tread circumferential direction is formed on its inside in the vehicle mounting direction that has a large influence on ride comfort, and as a result, ride comfort can effectively be improved. Further, edge components to the straight running direction is ensured by the intermediate sipes 8a, and as a result, on-snow performance during straight running can further be improved.

Here, the sipe width of the intermediate sipe 8a may be 0.5 to 1.5 mm, for example, and the sipe depth may be 6 to 8 mm, for example. Further, the distance in the tread circumferential direction between the intermediate sipes 8a may preferably be 10 to 15 mm. When the distance is 10 mm or more, the rigidity of the land portion 3b is ensured, and as a result, steering stability and noise performance can be ensured. On the other hand, when the distance is 15 mm or less, the effect of improvement of on-snow performance during straight running can further effectively be obtained.

Furthermore, when the angle formed by the line connecting both ends of the intermediate sipe 8a relative to the tread width direction is defined as an inclination angle of the intermediate sipe 8a relative to the tread width direction, the inclination angle of the intermediate sipe 8a is 25° or less in the example illustrated in FIG. 1.

Furthermore, the extension length in the tread width direction of the intermediate sipe 8a may preferably be 40 to 80% of the width in the tread width direction of the land portion 3b. When the length is 40% or more, edge components are sufficiently ensured, and as a result, on-snow performance during straight running can further be improved. On the other hand, when the length is 80% or less, the portion continuous in the tread circumferential direction will be a sufficient width, and as a result, ride comfort can be improved.

As illustrated in FIG. 1, the tire having a small number of lateral grooves and a large number of sipes may preferably be used as a narrow width, large diameter tire in which, in particular when the internal pressure is 250 kPa or more and the tire section width is less than 165 (mm), a ratio of the tire section width SW and the outer diameter OD, SW/OD, is 0.26 or less, or, when the tire section width SW is 165 (mm) or more, the aforementioned tire section width SW and the outer diameter OD satisfy the relational expression (1) of OD ≥ 2.135 x SW + 282.3. Further, the aforementioned tire may further preferably be used when a tire with a ratio OD/SW of 3.6 or more is used under an internal pressure of 250 kPa or more.

The disclosed tire may preferably be used under an internal pressure of 250 to 350 kPa, in particular, under a high internal pressure of 280 kPa or more, and may further preferably be used under a high internal pressure of 300 kPa or more. Under the conditions of narrow width and high internal pressure, the sipes grip the road surface with a large force, and edge effect can effectively be exhibited. Further, in the tire that satisfies the aforementioned relational expression (1), the ground contact length tends to increase, and when the internal pressure is 250 kPa or more, increase in the ground contact length is suppressed, and as a result, the deformation amount of tread rubber can be decreased, and the rolling resistance can further be decreased. Further, as the aforementioned tire is preferably used as a vehicle radial tire and corresponds to the load that can be used on a public road, the air volume may preferably be 15000 cm³ or more.

FIG. 3 is a developed view illustrating a tread pattern of a pneumatic tire according to Embodiment 2 of this disclosure. In FIG. 3, the tread surface 1 and the buttress portion of the tire when it is mounted on an applicable rim, inflated with a prescribed internal pressure and applied with no load are illustrated in a developed manner. The tire according to this embodiment has a ratio of the tire section width SW and the outer diameter OD, SW/OD, of 0.26 or less when the internal pressure is 250 kPa or more and the tire section width SW is less than 165 (mm), and when the tire section width SW is 165 (mm) or more, the aforementioned tire section width SW and the outer diameter OD satisfy the relational expression of OD ≥ 2.135 x SW + 282.3.

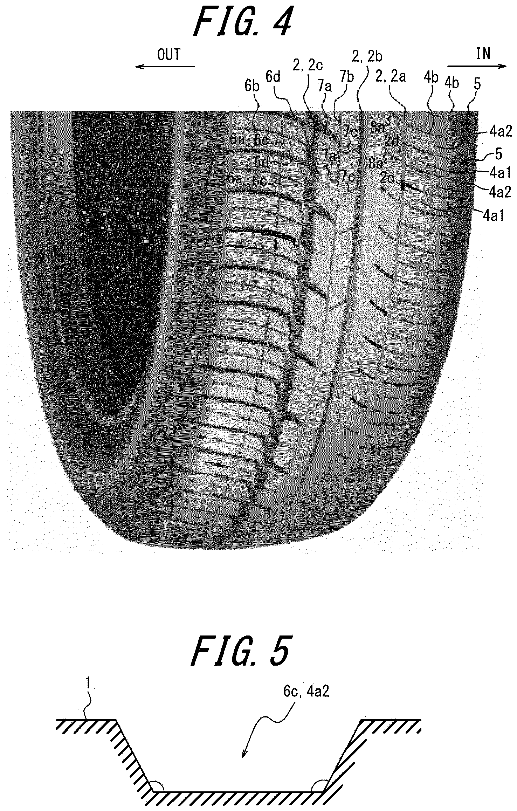

Further, FIG. 4 is a partial perspective view of a tire having a tread pattern similar to that according to FIG. 3, except for the number of first one end open sipes 7c, second one end open sipes 7d and intermediate sipes 8a,

The tire illustrated in FIG. 3 is different from that illustrated in FIG. 1 in the following points.

First, as illustrated in FIG. 3, with respect to the outer shoulder land portion 3d, respective distances between two widthwise grooves 6a adjacent in the tread circumferential direction are provided with one outer circumferential sipe 6c extending in the tread circumferential direction. As illustrated in FIG. 3, both ends of the outer circumferential sipe 6c terminate in the land portion 3d, and do not communicate with the widthwise groove 6a.

This outer circumferential sipe 6c allows for ensuring edge components to the lateral force direction in the outer shoulder land portion 3d, and as a result, on-snow performance during cornering can further be improved.

Further, in Embodiment 1 illustrated in FIG. 1, the block defined by two widthwise grooves 6a adjacent in the tread circumferential direction, the outer circumferential main groove 2c and the tread edge TE is shaped in a rectangle with each length in the tread width direction longer than that in the tread circumferential direction. Meanwhile, in Embodiment 2 illustrated in FIG. 3, as the distance in the tread circumferential direction between the widthwise grooves 6a is 17 to 30 mm, each length in the tread circumferential direction of the block is large, and the block is formed to be split into two blocks by the outer circumferential sipe 6c (to be more precise, not split completely because the outer circumferential sipe 6c does not communicate with the widthwise groove 6a), which allows the block to be shaped in almost square, and as a result, twist deformation of the block, in particular when fore-and-aft force is acted thereon, is suppressed, and as a result, wear resistance can be improved.

Furthermore, as the outer circumferential sipe 6c intersects with the outer widthwise sipe 6b but does not communicate with the widthwise groove 6a, steering stability and noise performance can be ensured without excessively decreasing the block rigidity. Thus, the outer circumferential sipe 6c may preferably be spaced apart from the widthwise groove 6a by 1.5 mm or more.

It is to be noted that the sipe width of the outer circumferential sipe 6c may be 0.5 5o 1.5 mm, for example, and the sipe depth may be 6 to 8 mm, for example.

Here, FIG. 5 is a cross-sectional view of the outer circumferential sipe 6c in the tread circumferential direction. As illustrated in FIG. 5, as for both ends in the tread circumferential direction of the outer circumferential sipe 6c, the side walls thereof are inclined so that the length in the tread circumferential direction of the outer circumferential sipe 6c is decreased from the tread surface 1 side towards the sipe depth direction. This configuration allows the tread surface 1 side to ensure the sipe length so as to ensure edge components, while the corner portion of the sipe bottom is made to be an obtuse angle so as to increase the rigidity, which prevents this angle portion from being an abrasion nucleus, and as a result, wear resistance can be improved.

Furthermore, in the tire of Embodiment 1 illustrated in FIG. 1, the inclination angle of the widthwise groove 6a relative to the tread width direction is less than 10 °, while in the tire of Embodiment 2 illustrated in FIG. 3, it is 10° or more. This allows for ensuring edge components not only in the traveling direction but also both in the traveling direction and the lateral force direction, and as a result, on-snow performance during straight running and cornering can further be improved comprehensively.

Further, in the tire of Embodiment 2 illustrated in FIG. 3, each widthwise groove 6a is provided with a raised bottom portion 6d so as to improve the block rigidity, and as a result, steering stability and wear resistance can be improved, and further, noise can be reduced. Here, the height of the raised bottom portion 6d may be 30 to 60% of the groove depth of the widthwise groove 6a, for example. Further, the raised bottom portion 6d may preferably be provided around the outer circumferential main groove 2c of the bottom of the widthwise groove 6a where rigidity tends to be low.

The tire of Embodiment 2 illustrated in FIG. 3 is different from that of Embodiment 1 illustrated in FIG. 1 also in that the inclination angle formed by the line connecting the both ends of the intermediate sipe 8a formed in the land portion 3b relative to the tread width direction is 15 °or more. As edge components not only in the traveling direction but also in both the traveling direction and the lateral force direction can be ensured, on-snow performance during straight running and cornering can further be improved comprehensively.

Next, the tire of Embodiment 2 illustrated in FIG. 3 is different from that of Embodiment 1 illustrated in FIG. 1 also in that the tire of Embodiment 2 has one or more raised bottom portions 2d in the inner circumferential main groove 2a, which allows for improving the rigidity of the block so as to improve steering stability and wear resistance, and as a result, noise can further be reduced. Here, the height of the raised bottom portion 2d may be 30 to 60% of the groove depth of the inner circumferential main groove 2a, for example. Further, the raised bottom portion 2d may preferably be provided on the position communicating with the inner widthwise sipe 4b in light of reinforcement of the portion where rigidity is low.

It is noted that, in Embodiment 2 illustrated in FIG. 3, the tire is a narrow-width tire in which a ratio of the tire section width SW and the outer diameter OD, SW/OD, is 0.26 or less when the internal pressure is 250 kPa or more and the tire section width SW is less than 165 (mm), and when the tire section width SW is 165 (mm) or more, the aforementioned tire section width SW and the outer diameter OD satisfy the relational expression of OD ≥ 2.135 x SW + 282.3. Accordingly, even if the raised bottom portion 2d is provided, wet performance can sufficiently be ensured.

Further, in the tire of Embodiment 2 illustrated in FIG. 3, two rows of inner circumferential sipes are provided in the land portion 3a. Specifically, the tire has the first inner circumferential sipe 4a1 extending in the tread circumferential direction and the second inner circumferential sipe 4a2 inside in the vehicle mounting direction of the first inner circumferential sipe 4a1. The second inner circumferential sipe 4a2 extends in the tread circumferential direction, between, among the inner widthwise sipes 4b, those connecting to the lug groove 5 in the region outside the tread edge TE in the tread width direction. This configuration allows for ensuring edge components to the lateral force direction, and as a result, on-snow performance during cornering can further be improved. Furthermore, the second inner circumferential sipe 4a2 intersects with, among the inner widthwise sipes 4b, the one not connecting to the lug groove 5, but does not communicate with the one connecting to the lug groove 5. Thus steering stability and noise performance can further be ensured without excessively decreasing the rigidity of the block. Accordingly, the second inner circumferential sipe 4a2 may preferably be spaced apart from the inner widthwise sipe 4b connecting to the lug groove 5 by 1.5 mm or more. The sipe width of the second inner circumferential sipe 4a2 may be 0.5 to 1.5 mm, for example, and the sipe depth may be 6 to 8 mm, for example. Further, as illustrated in FIG. 5, as for both ends in the tread circumferential direction of the second inner circumferential sipe 4a2, the side walls thereof are inclined so that each length in the tread circumferential direction of the second inner circumferential sipe 4a2 is decreased from the tread surface 1 side towards the sipe depth direction. This configuration allows the tread surface 1 side to ensure the sipe length so as to ensure edge components, while the corner portion of the sipe bottom is made to be an obtuse angle so as to increase the rigidity, which allows for suppressing this corner portion from being an abrasion nucleus, and as a result, wear resistance can be improved.

As mentioned above, in the tire of Embodiment 2 illustrated in FIG. 3, the second inner circumferential sipe 4a2 is provided in the inner shoulder land portion 3a so as to provide two rows of inner circumferential sipes, and one row of outer circumferential sipe 6c is provided in the outer shoulder land portion 3d. That is, in the tire of Embodiment 2 illustrated in FIG. 3, the number of rows of inner circumferential sipe 4a is greater than that of the outer circumferential sipe 6c.

Here, the groove depth h1 of the inner circumferential main groove 2a, the sipe depth h2 of the first inner circumferential sipe 4a1 and the sipe depth h3 of the second inner circumferential sipe 4a2 may preferably satisfy h1 > h3 > h2. First, in light of drainage performance, the inner circumferential main groove 2a may preferably have a certain degree of depth. Under this condition, when the sipe depth of the first inner circumferential sipe 4a1 is too deep, the rigidity of the land portion between the inner circumferential main groove 2a and the first inner circumferential sipe 4a1 is reduced too much, which may decrease steering stability. Thus, the sipe depth of the first inner circumferential sipe 4a1 may preferably be shallower than that of the groove of the inner circumferential main groove 2a. On the other hand, when the sipe depth thereof is decreased so that it will be the same depth as that of the second inner circumferential sipe 4a2, the second inner circumferential sipe 4a2 is worn off early, which may decrease on-snow performance soon during wear. Thus, the sipe depth h3 of the second inner circumferential sipe 4a2 may preferably be deeper than the sipe depth h2 of the first inner circumferential sipe 4a1. Here, as the sipe depth h2 of the first inner circumferential sipe 4a1 is set shallow, even if the sipe depth h3 of the second inner circumferential sipe 4a2 is set deeper than h2, the rigidity of each land portion between inner circumferential sipes may not be decreased too much. On the other hand, considering the fact that the inner circumferential sipe contributes less to drainage performance compared to the inner circumferential main groove 2a and does not decrease the rigidity of the land portion 3a too much, the sipe depths h2 and h3 of the inner circumferential sipe may preferably be shallower than the groove depth h1 of the inner circumferential main groove 2a.

Further, as mentioned above, the first inner circumferential sipe 4a1 may preferably extend continuously in the tread circumferential direction and the second inner circumferential sipe 4a2 may preferably terminate in the land portion 3a. As the corner portion of the first inner circumferential sipe 4a1 does not tend to deform due to its shallow sipe depth, the edge components may preferably be increased continuously in the tread circumferential direction. On the other hand, as the sipe depth of the second inner circumferential sipe 4a2 is relatively deep, the corner portion tends to deform, and the rigidity of the corner portion can be increased due to the presence of the terminating portion, which allows for ensuring the edge pressure, and as a result, on-snow performance during cornering can further be improved comprehensively.

Here, when the distance in the tread circumferential direction of the inner widthwise sipe 4b is defined as L (mm), the distance in the tread width direction between the inner circumferential main groove 2a and the first inner circumferential sipe 4a1 is defined as W1 (mm) and the distance in the tread width direction between the first inner circumferential sipe 4a1 and the second inner circumferential sipe 4a2 is defined as W2 (mm), it is preferable that 0.7 ≤ L/W1 ≤ 1.4 and 0.7 ≤ L/W2 ≤ 1.4 are satisfied.

By setting the ratio of L/W1 and the ratio of L/W2 close to 1, twisting rigidity of the land portion defined by sipes is increased, and as a result, on-snow performance during cornering can further be improved.

Although Embodiments of this disclosure have been described above with reference to the drawings, the disclosed pneumatic tire is not limited to the aforementioned examples and may appropriately be changed. Specifically, for example, in the aforementioned Embodiments, as illustrated in FIGS. 1 and 3, the land portions 3b and 3c other than the inner shoulder land portion 3a and the outer shoulder land portion 3d may each be formed in a rib-like land portion as mentioned above and be provided with a variety of grooves and sipes. In the disclosed tire, the land portions other than the inner shoulder land portion 3a and the outer shoulder land portion 3d may arbitrarily be provided with grooves and sipes.

### INDUSTRIAL APPLICABILITY

According to this disclosure, a pneumatic tire capable of improving on-snow performance, drainage performance and ride comfort can be provided.

### REFERENCE SIGNS LIST

- 1: Tread surface
- 2, 2a: Inner circumferential main groove
- 2, 2b: Circumferential main groove
- 2, 2c: Outer circumferential main groove
- 2d: Raised bottom portion
- 3a: Inner shoulder land portion
- 3b, 3c: Rib-like land portion
- 3d: Outer shoulder land portion
- 4a: Inner circumferential sipe
- 4a1: First inner circumferential sipe
- 4a2: Second inner circumferential sipe
- 4b: Inner widthwise sipe
- 5: Lug groove
- 6a: Widthwise groove
- 6b: Outer widthwise sipe
- 6c: Outer circumferential sipe
- 6d: Raised bottom portion
- 7a: One end open lateral groove
- 7b: Central circumferential sipe
- 7c: First one end open sipe
- 7d: Second one end open sipe
- 8a: Intermediate sipe
- 101, 102: Inclined belt layer
- 103, 104: Circumferential belt layer
- 111, 112: Inclined belt layer
- 113: Circumferential belt layer
- 121, 122: Inclined belt layer
- 123: Circumferential belt layer
- 131: Side reinforcing rubber
- CL: Tire equatorial plane
- TE: Tread edge

## Claims

1. A pneumatic tire comprising, on a tread surface (1), a plurality of circumferential main grooves (2) continuously extending in a tread circumferential direction, and having a specified vehicle mounting direction, wherein,
on the tread surface (1), when a land portion (3a) defined by, among the plurality of circumferential main grooves (2), an inner circumferential main groove (2a) located on an innermost side in the vehicle mounting direction and a tread edge (TE) is defined as an inner shoulder land portion (3a), and a land portion (3d) defined by, among the plurality of circumferential main grooves (2), an outer circumferential main groove (2c) located on an outermost side in the vehicle mounting direction and another tread edge (TE) is defined as an outer shoulder land portion (3d),
the outer shoulder land portion (3d) has a plurality of widthwise grooves (6a) communicating with the outer circumferential main groove (2c) and the another tread edge (TE) and extending in the tread width direction, and an outer widthwise sipe (6b) located between the widthwise grooves (6a) adjacent in the tread circumferential direction and extending in the tread width direction, **characterized in that**
the inner shoulder land portion (3a) does not include a groove, and includes only one or more inner circumferential sipe (4a) extending in the tread circumferential direction and a plurality of inner widthwise sipes (4b) extending in a tread width direction;
the width of the inner shoulder land portion (3a) measured along the tread width direction is 18 to 28% with respect to the tread width; and
the width of the outer shoulder land portion (3d) measured along the tread width direction is 25 to 35% with respect to the tread width.

2. The pneumatic tire according to claim 1, wherein,
the outer shoulder land portion (3d) does not have an outer circumferential sipe extending in the tread circumferential direction,
or,
when the outer shoulder land portion has the outer circumferential sipe (6c), the number of rows of the inner circumferential sipe (4a) is greater than the number of rows of the outer circumferential sipe (6c).

3. The pneumatic tire according to claim 1 or 2, wherein a width of the outer shoulder land portion (3d) measured along the tread width direction is greater than a width of the inner shoulder land portion (3a) measured along the tread width direction.

## Patentansprüche

1. Luftreifen, umfassend, auf einer Lauffläche (1), eine Mehrzahl von Umfangshauptrillen (2), welche sich kontinuierlich in einer Laufflächenumfangsrichtung erstrecken, und welcher eine bestimmte Fahrzeugeinbaurichtung aufweist, wobei
auf der Lauffläche (1), wenn ein Stegabschnitt (3a), durch, unter der Mehrzahl von Umfangshauptrillen (2), eine innere Umfangshauptrille (2a), welche auf einer innersten Seite in der Fahrzeugeinbaurichtung angeordnet ist, und einen Laufflächenrand (TE) definiert, als ein innerer Schulterstegabschnitt (3a) definiert ist, und ein Stegabschnitt (3d), durch, unter der Mehrzahl von Umfangshauptrillen (2), eine äußere Umfangshauptrille (2c), welche auf einer äußersten Seite in der Fahrzeugeinbaurichtung angeordnet ist, und einen anderen Laufflächenrand (TE) definiert, als ein äußerer Schulterstegabschnitt (3d) definiert ist,
der äußere Schulterstegabschnitt (3d) eine Mehrzahl von breitseitigen Rillen (6a) aufweist, welche mit der äußeren Umfangshauptrille (2c) und mit dem anderen Laufflächenrand (TE) kommunizieren und sich in der Laufflächenbreitenrichtung erstrecken, und eine äußere breitseitige Lamelle (6b), welche zwischen den breitseitigen Rillen (6a) angeordnet ist, welche in der Laufflächenumfangsrichtung angrenzen und sich in der Laufflächenbreitenrichtung erstrecken, **dadurch gekennzeichnet, dass**
der innere Schulterstegabschnitt (3a) keine Rille umfasst, und nur eine oder mehrere innere Umfangslamellen (4a), welche sich in der Laufflächenumfangsrichtung erstreckt, und eine Mehrzahl von inneren breitseitigen Lamellen (4b) umfasst, welche sich in einer Laufflächenbreitenrichtung erstrecken;
wobei die Breite des inneren Schulterstegabschnitts (3a), gemessen entlang der Laufflächenbreitenrichtung, 18 bis 28% der Laufflächenbreite beträgt; und
die Breite des äußeren Schulterstegabschnitts (3d), gemessen entlang der Laufflächenbreitenrichtung 25 bis 35% der Laufflächenbreite beträgt.

2. Luftreifen nach Anspruch 1, wobei der äußere Schulterstegabschnitt (3d) keine äußere Umfangslamelle aufweist, welche sich in der Laufflächenumfangsrichtung erstreckt,
oder, wenn der äußere Schulterstegabschnitt die äußere Umfangslamelle (6c) aufweist, die Anzahl von Reihen der inneren Umfangslamelle (4a) größer als die Anzahl von Reihen der äußeren Umfangslamelle (6c) ist.

3. Luftreifen nach Anspruch 1 oder 2, wobei eine Breite des äußeren Schulterstegabschnitts (3d), gemessen entlang der Laufflächenbreitenrichtung, größer als eine Breite des inneren Schulterstegabschnitts (3a), gemessen entlang der Laufflächenbreitenrichtung, ist.

## Revendications

1. Bandage pneumatique, comprenant, sur une surface de bande de roulement (1), plusieurs rainures circonférentielles principales (2) s'étendant en continu dans une direction circonférentielle de la bande de roulement, et ayant une direction spécifiée du montage sur un véhicule, dans lequel :
sur la surface de bande de roulement (1), lorsqu'une partie d'appui (3a) est définie par, parmi les plusieurs rainures circonférentielles principales (2), une rainure circonférentielle principale interne (2a) située sur un côté interne extrême, dans la direction du montage sur le véhicule, et un bord de la bande de roulement (TE) est défini comme constituant une partie d'appui d'épaulement interne (3a), et une partie d'appui (3d), définie par, parmi les plusieurs rainures circonférentielles principales (2), une rainure circonférentielle principale externe (2c) située sur un côté externe extrême, dans la direction de montage sur le véhicule, et un autre bord de la bande de roulement (TE) est défini comme constituant une partie d'appui d'épaulement externe (3d) ;
la partie d'appui d'épaulement externe (3d) comporte plusieurs rainures dans le sens de la largeur (6a) communiquant avec la rainure circonférentielle principale externe (2c) et l'autre bord de la bande de roulement (TE) et s'étendant dans la direction de la largeur de la bande de roulement, et une lamelle externe dans le sens de la largeur (6b) située entre les rainures dans le sens de la largeur (6a) adjacentes dans la direction circonférentielle de la bande de roulement et s'étendant dans la direction de la largeur de la bande de roulement, **caractérisé en ce que** :
la partie d'appui d'épaulement interne (3a) n'inclut pas de rainure, et inclut uniquement une ou plusieurs lamelles circonférentielles internes (4a) s'étendant dans la direction circonférentielle de la bande de roulement, et plusieurs lamelles internes dans le sens de la largeur (4b) s'étendant dans une direction de la largeur de la bande de roulement :;
la largeur de la partie d'appui d'épaulement interne (3a), mesurée le long de la direction de la largeur de la bande de roulement, représente 18 à 28% de la largeur de la bande de roulement ; et
la largeur de la partie d'appui d'épaulement externe (3d), mesurée le long de la direction de la largeur de la bande de roulement, représente 25 à 35% de la largeur de la bande de roulement.

2. Bandage pneumatique selon la revendication 1, dans lequel :
la partie d'appui d'épaulement externe (3d) ne comporte pas de lamelle circonférentielle externe s'étendant dans la direction circonférentielle de la bande de roulement ; ou
lorsque la partie d'appui d'épaulement externe comporte la lamelle circonférentielle externe (6c), le nombre de rangées de la lamelle circonférentielle interne (4a) est supérieur au nombre de rangée de la lamelle circonférentielle externe (6c).

3. Bandage pneumatique selon les revendications 1 ou 2, dans lequel une largeur de la partie d'appui d'épaulement externe (3d), mesurée le long de la direction de la largeur de la bande de roulement, est supérieure à une largeur de la partie d'appui d'épaulement interne (3a), mesurée le long de la direction de la largeur de la bande de roulement.
